# EUROPEAN PATENT SPECIFICATION

(11) **EP 4 690 557 B1**
(45) Date of publication and mention of the grant of the patent: **09.12.2026**
(21) Application number: 24712516.4
(22) Date of filing: 22.03.2024
(51) Int. Cl.: H04B 10/116

(54) **METHOD OF PILOT LIGHT OFFSET COMPENSATION IN OPTICAL WIRELESS COMMUNICATION SYSTEMS**
VERFAHREN ZUR KOMPENSATION DES PILOTLICHTVERSATZES IN OPTISCHEN DRAHTLOSEN KOMMUNIKATIONSSYSTEMEN
PROCÉDÉ DE COMPENSATION DE DÉCALAGE DE LUMIÈRE PILOTE DANS DES SYSTÈMES DE COMMUNICATION OPTIQUE SANS FIL

(30) Priority: 30.03.2023 EP 23165481
(43) Date of publication of application: 11.02.2026
(73) Proprietor: Signify Holding B.V., 5656 AE Eindhoven (NL)
(72) Inventor: VREHEN, Joris, Jan, 5656 AE Eindhoven (NL)
(74) Representative: Verweij, Petronella Daniëlle
(86) International application number: PCT/EP2024/057809
(87) International publication number: WO 2024/200283

(56) References cited:
- CN-A- 114 696 902
- US-A1- 2015 377 609
- KEHAN ZHANG ET AL: "Tracking System for Optical Mobile Communication and the Design Rules", ARXIV.ORG, CORNELL UNIVERSITY LIBRARY, 201 OLIN LIBRARY CORNELL UNIVERSITY ITHACA, NY 14853, 24 April 2020 (2020-04-24), XP081652362

## Description

### FIELD OF THE INVENTION

The invention relates to the field of free space optical wireless communication. More particularly, various methods, apparatus, systems, and computer-readable media are disclosed herein related to a method for beam alignment in optical wireless communication systems.

### BACKGROUND OF THE INVENTION

To enable more and more electronic devices like laptops, tablets, and smartphones to connect wirelessly to the Internet, wireless communication confronts unprecedented requirements on data rates and also link qualities, and such requirements keep on growing year over year, considering the emerging digital revolution related to Internet-of-Things (IoT). Radio frequency technology like Wi-Fi has limited spectrum capacity to embrace this revolution. In the meanwhile, light fidelity (Li-Fi) is drawing more and more attention with its intrinsic security enhancement and capability to support higher data rates over the available bandwidth in visible light, Ultraviolet (UV), and Infrared (IR) spectra.

However, to establish a point-to-point optical wireless communication link with a high data rate over a large separate distance, the optical wireless communication system or Li-Fi system usually uses narrow beam angles (in the order of a few degrees), resulted from the properties of light sources as well as a practical power budget. Furthermore, to achieve such a high-speed link reliably, the two remote communication devices need to be aligned precisely, which may be quite challenging due to the combination of the narrow beam width and the large separation. To assist this alignment, different methods have been proposed, such as with the aid of a camera, a pilot light from the remote device, or to use feedback information from the remote device. These systems suffer from either a long latency to reach a final alignment or additional complexity to the system.

For example, in a pilot light based beam alignment system, the pilot light should ideally be located at the position of the pilot light to receive the maximum signal. This is of course not possible to have both the receiver and the pilot light in the same position. In practice, the pilot light is usually placed in front of a photo detector in the optical receiver. The surface of the pilot light shall be much smaller than the surface of the photo detector. However, to support high data rate, the photo detector needs small surface to obtain low parasitic capacitance. Thus, the requirement is difficult to satisfy in practice, or it may result in negative impact on the bandwidth to be supported by the data link. Alternatively, pilot light may be located on the same virtual position using a semi-transparent mirror or a dichroic mirror.

A further alternative option is to split up the pilot light into multiple smaller pilot lights that are placed symmetrically round the data receiving detector. One of the challenges of this setup is the accuracy of the alignment. Small mechanical shifts or pollution on the optical windows or asymmetries in the light emission of the pilot lights will create offsets from the data beam on the data receiver resulting in a lower S/N ration of the data signal or even a failure to receive data.

CN114696902A relates to a visible light communication method, which comprises the steps that a LiFi station is aligned with a LiFi terminal through at least two paths respectively, the alignment directions corresponding to the different paths are different. The LiFi station sends service data to the LiFi terminal according to a first alignment direction corresponding to the first path; and when the first path is blocked, the LiFi station sends the service data to the LiFi terminal according to a second alignment direction corresponding to the second path.

US2015377609A1 relates to a light based positioning method, which comprises: responsive to receiving a light signal from at least one light source available to the device, decoding a beacon from the received light signal, the beacon associated with the at least one light source; measuring signal strength of the received light signal; and determining a position of the device at least in part based on the decoded beacon, the measured signal strength, and number of the at least one light source.

### SUMMARY OF THE INVENTION

Given the limitation of a conventional pilot light based system, it is proposed in this invention to provide a more accurate alignment scheme to compensate the offset in a pilot light based beam steering system without the need for a return channel. The feedback to an optical transmitter for beam alignment is provided by an optical receiver by changing the center of gravity of combined light intensities from multiple pilot light sources.

More particularly, the goal of this invention is achieved by an optical receiver as claimed in claim 1, by an optical wireless communication system as claimed in claim 12, and by a method carried out by an optical receiver as claimed in claim 15.

In accordance with a first aspect of the invention an optical receiver is provided. An optical receiver comprising:
- a photo detector configured to detect a data beam sent by an optical transmitter;
- at least two pilot light sources configured to emit pilot light to assist a beam alignment procedure carried out by the optical transmitter; wherein the at least two pilot light sources are placed on different sides of the photo detector;
- a controller configured to
   - determine for each one of the at least two pilot light sources an individual pilot light intensity based on a received beam strength of the data beam detected by the photo detector, and
   - control each one of the at least two pilot light sources to emit pilot light according to the determined corresponding individual pilot light intensity, such that the center of gravity of combined pilot light intensities of the at least two pilot light sources provides an indication to the optical transmitter about a desired direction of movement of the data beam.

The photo detector of the optical receiver is a semiconductor device that coverts light into electric current or voltage based on an operation mode of the device. The photo detector may also be called a photodiode, a light detector, or a photo sensor. The photo detector may contain optical filters, built-in lenses, and may have large or small surface areas. Depending on the construction of the device, photo detectors can be classified into different types, such as PN photodiode, Schottky photodiode, PIN photodiode, and Avalanche photodiode.

Preferably, the two pilot light sources are symmetrically placed on different sides of the photo detector. It may also be the case that the at least two pilot light sources are placed on different sides of the photo detector in an asymmetrical manner, such as with different distances to the photo detector. Then the controller needs to take the different distances into consideration when determining the individual pilot light intensity, such that the center of gravity of combined pilot light intensities provides good indication to the optical transmitter. For example, the different distances between the at least two pilot light sources and the photo detector may be compensated by applying additionally one or more correction factor on the individual pilot light intensities as compared to the symmetrical deployment.

When the optical receiver is not aligned with the remote optical transmitter, the data beam coming from the optical transmitter may be aimed beside a detection area of the optical receiver. For example, there may be an offset between the center of the injected data beam and the center of the detection area of the photo detector. Such an offset leads to a reduced received beam strength, such as a less optimal received data signal. The larger the offset, the worse the received signal quality.

The center of gravity, also known as center of mass, of an object or system refers to the point where the weight of the object or system can be considered to be concentrated. In other words, it is the point where the object or system would balance if it were suspended from that point. Here the center of gravity of a collection of pilot light sources with varying intensities depends on the geometry and distribution of the pilot light sources and the individual intensities of the pilot light sources, such that it is closer to the more intense sources.

By introducing an asymmetry in the pilot light intensities, the center of gravity of the combined pilot light gives an indication on a desirable moving direction of the data beam to the optical transmitter. And then the optical transmitter may adjust the emitted data beam such that the offset will be minimized or the center of the injected data beam and the center of the detection area of the photo detector will be better aligned. In such a way, feedback for beam alignment is piggybacked in the pilot light itself and no separate return channel or feedback signal is required from the optical receiver to the optical transmitter.

Advantageously, wherein the controller is further configured to control each one of the at least two pilot light sources to maintain individual pilot light intensities when the received beam strength is above a first predefined threshold.

The first predefined threshold may be a value either in a linear scale or a decibel scale, which indicates that the received beam strength is sufficient for further processing in the optical receiver, such as to demodulate and decode the data comprised in the optical data beam.

Beneficially, the controller is further configured to control the at least two pilot light sources to change the individual pilot light intensities to start scanning the center of gravity of the pilot light intensities over a detection surface of the optical receiver when the received beam strength is below a second predefined threshold.

When there are only two pilot light sources deployed, the scan may be carried out by moving the center of gravity over a line between the two pilot light source.

Preferably, the controller is further configured to stop scanning when the received beam strength is above a third predefined threshold.

The third predefined threshold may be a value either in a linear scale or a decibel scale. When the received beam strength is above the third predefined threshold, it indicates that the data beam is roughly aligned with the detection area of the optical receiver, and probably a fine adjustment may still be needed. Depending on the application, the third predefined threshold may be lower than the first predefined threshold, such as by a few dB if in a decibel scale.

In a preferred setup, the controller is configured to control the pilot light sources to follow a raster scan over a detection surface with the center of gravity of the pilot light intensities when there are more than two pilot light sources.

With more than two pilot light sources deployed, a raster scan in two dimensions over the detection surface can be carried out.

Beneficially, the controller is configured to control the at least two pilot light sources to implement an iterative local search with the center of gravity of combined pilot light intensities when the received beam strength is below the first predefined threshold but above a fourth predefined threshold; wherein the iterative local search is implemented by measuring a local derivative of the received beam strength of the data beam versus the center of gravity of combined pilot light intensities and then changing the center of gravity of combined pilot light intensities in the direction towards higher received beam strength of the data beam.

The iterative local search may be subsequent to an initial search or a new search (raster search), such that the initial search or the new search may be used for acquisition and the iterative local search may be used for fine tuning or tracking. This also helpful when there is already a data communication link established between the optical transmitter and the optical receiver. For example, if at least one of the optical transmitter and the optical receiver has a small movement, the link quality may degrade due to a small misalignment, and the iterative local search may help the two communication devices get back to a better alignment for a higher data rate.

The fourth predefined threshold may be a value close or equal to a minimum received beam strength to maintain an optical wireless link, such as a signal strength required for the optical receiver to demodulate and decode received data signal at a lowest data rate.

Preferably, the iterative local search is according to a hill climbing algorithm.

Hill climbing is a mathematical optimization for local search, such as to find the maximum or minimum of a given function. The algorithm typically starts at a random point on the function and moves iteratively in the direction of the steepest ascent or descent until a local maximum or minimum is reached.

Here the algorithm may start with a point where the center of gravity of the combined pilot light is located when the coarse search ends, and the hill climbing algorithm improves the alignment by fine tuning the center of gravity of the combined pilot light to further maximize the received beam strength detected by the photo detector. for example, the iterative local search may be implemented by measuring a local derivative of the received beam strength of the data beam versus the center of gravity of combined pilot light intensities and then changing the center of gravity of combined pilot light intensities in the direction towards higher received beam strength of the data beam.

Advantageously, the optical receiver according to the present invention comprises at least three pilot light sources to assist the optical transmitter to adjust the data beam in two dimensions.

Beneficially, the optical receiver according to the present invention comprises one or more pilot light drivers configured to regulate a supply voltage and/or current connected to the more than one pilot light sources to apply the more than one pilot light intensities determined by the controller.

In one example, the pilot light is a continuous wave.

The pilot light may be an un-modulated continuous wave (CW), such that it has a constant amplitude and frequency.

In another example, the pilot light is a modulated wave.

The pilot light may also be a modulated wave, and the modulation may be applied to at least one of the amplitude, frequency, or phase of the emitted pilot light. It may also be possible that the pilot light is either an amplitude modulated or frequency modulated continuous wave.

In accordance with a second aspect of the invention an optical wireless communication system is provided. An optical wireless communication, OWC, system comprising:
- an optical transmitter comprising:
   - a light source configured to emit a data beam for optical data communication;
   - a subsystem configured to carry out a data beam alignment procedure based on pilot light received from a remote optical receiver; and
- the remote optical receiver according to the present invention.

The optical data communication may be according to an optical wireless communication standard. For example, the system may be compliant to an IEEE 802.11 standard (e.g., IEEE802.11bb) or an ITU G.9991 standard regarding high-speed optical wireless data communication.

For the high-speed optical wireless communication addressed in the present invention, it is preferably that the optical transmitter has a small beam angle. Beam angle or beam width is the aperture angle from where most of the transmission power is radiated. For example, the half power beam width is the angle between the half-power (-3dB) points of the main lobe of the radiation pattern. Beam angle or beam width is usually expressed in degrees. It is preferable that the beam angle of the optical transmitter is not larger than 30 degrees.

And even more beneficially, the narrow beam is not larger than 10 degrees half-angle. Such narrow beam is of practical consideration to support long distance and high data rate communication within a reasonable power budget.

The light source of the optical transmitter may be one of a light-emitting diode (LED), a laser diode, or a vertical-cavity surface-emitting laser (VCSEL). The optical data communication is carried out in an optical band, such as in visible light, Ultraviolet (UV), and Infrared (IR) spectra.

Beneficially, the subsystem comprises:
- a multi element detector configured to detect pilot light from the remote optical receiver;
- a beam-steering unit configured to steer the data beam emitted by the light source;
- a controller configured to control the beam-steering unit based on the indication provided by the center of gravity of the pilot light detected by the multi element detector.

The multi element detector is a kind of photo detector comprising more than one detector element. In one example, the multi element detector is a quadrant detector. Beneficially, the more elements comprised in the multi element detector, the better for assisting the beam alignment procedure. However, the cost of the system may also increase accordingly. Therefore, the selection of multi element detector is a design choice between performance and cost.

The beam-steering unit may comprise one or more mirrors, prisms, lenses, or rotating diffraction gratings.

In one example, the subsystem comprises:
- a tiltable mirror configured to reflect the pilot light to a beam splitter;
- the beam splitter configured to selectively direct:
   - either reflected pilot light from the tiltable mirror to a multi element detector; or
   - the beam from the light source to the remote optical receiver;
- the multi element detector configured to:
   - detect the reflected pilot light directed by the beam splitter; and
   - provide a control signal to steer the tiltable mirror based on the center of gravity of the reflected pilot light.

In a system with bi-directional optical wireless communication, the two remote devices may have both transmitting and receiving capabilities, such as a transceiver. Hence, a first device may have an optical transmitter according to the present invention and a conventional receiver, and a second device may have a conventional transmitter and an optical receiver according to the present invention. It may also be an option that both devices comprised the optical transmitter and the optical receiver according to the present invention. And then, the beam alignment procedure may be enabled bi-directionally.

In accordance with a third aspect of the invention a method is provided. A method carried out by an optical receiver comprising the steps of:
- detecting, by a photo detector of the optical receiver, a data beam sent by an optical transmitter;
- emitting pilot light, by at least two pilot light sources of the optical receiver, to assist a beam alignment procedure carried out by the optical transmitter; wherein the at least two pilot light sources are placed on different sides of the photo detector;
- determining, by a controller of the optical receiver, for each one of the at least two pilot light sources an individual pilot light intensity based on a received beam strength of the data beam detected by the photo detector, and controlling each one of the at least two pilot light sources to emit pilot light according to the determined corresponding individual pilot light intensity, such that the center of gravity of the combined pilot light intensities of the at least two pilot light sources provides an indication to the optical transmitter about a desired direction of movement of the data beam.

### BRIEF DESCRIPTION OF THE DRAWINGS

In the drawings, like reference characters generally refer to the same parts throughout the different figures. Also, the drawings are not necessarily to scale, emphasis instead generally being placed upon illustrating the principles of the invention.
Fig. 1 demonstrates a conventional unidirectional beam steering system for optical wireless communication;
Fig. 2 illustrates basic components of an optical receiver according to the present invention;
Fig. 3 demonstrates an example arrangement of at least two pilot light sources and a photo detector in an optical receiver;
Fig. 4 illustrates one example of the receiving plane of the optical receiver with the data beam from the optical transmitter aimed beside the photo detector due to an offset;
Fig. 5 demonstrates an implementation of the optical receiver to apply the more than one pilot light intensities via a pilot light driver;
Fig. 6 illustrates an optical wireless communication system;
Fig. 7 illustrates one example to implement the subsystem in the optical transmitter;
Fig. 8 illustrates another example to implement the subsystem in the optical transmitter; and
Fig. 9 shows a flow chart of a method of an optical receiver.

### DETAILED DESCRIPTION OF EMBODIMENTS

The embodiments set forth below represent information to enable those skilled in the art to practice the embodiments and illustrate the best mode of practicing the embodiments. Upon reading the following description in light of the accompanying drawings, those skilled in the art will understand the concepts of the disclosure and will recognize applications of these concepts not particularly addressed herein. It should be understood that these concepts and applications fall within the scope of the disclosure.

For optical wireless communication, such as LiFi, it is known that for a certain separation distance between a transmitter and a receiver, much less transmission power is needed if the radiated beam from the transmitter is narrower. As the transmitter beam gets narrower, it is necessary to direct the beam more accurately towards the receiver.

In order to establish a stable communication with a high throughput, both devices need to be facing each other and be properly aligned. This can be quite challenging in practice, due to the combination of a narrow beam and a large separation.

For this purpose, a pilot light can be used, which is located close to the photo detector in the receiver and transmits the pilot light signal back to the transmitter. The pilot light signal may be an out of band signal, which uses a frequency band different from the communication signal. Alternatively, the pilot light might have a different wavelength or wavelength band than the communication signal such that they can be separated by optical filters. The transmitter will then detect the pilot signal and use the detection information to direct the transmitting beam more accurately towards the receiver.

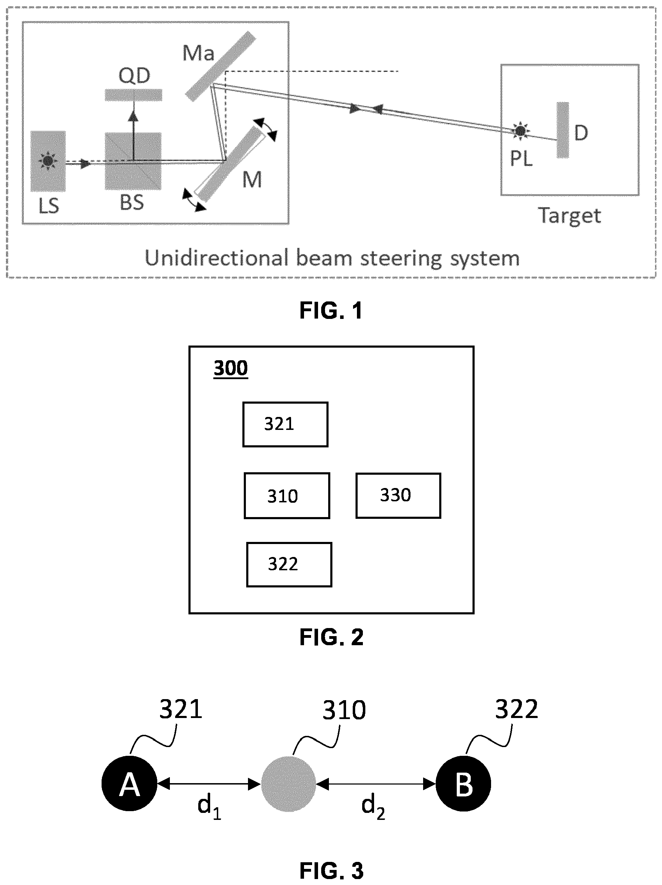

Fig. 1 demonstrates an example of a beam alignment setup based on a pilot light in an optical wireless communication system. The transmitter shown in the block to the left of Fig. 1 comprises a light source (LS), a beam splitter (BS), a quadrant detector (QD), and a beam splitter (BS). The light source (LS) is used to send optical data signals to a remote optical receiver. The tiltable Mirror (M/Ma) is adjustable in both X and Y direction to obtain full coverage in space. The beam splitter (BS) is used to selectively directs the light received the tiltable Mirror (M/Ma) to the quadrant detector (QD) and from the light source (LS) to the remote optical receiver. The remote optical receiver or the target device shown in the block to the right of Fig. 1 comprises at least a photo detector (D) and a pilot light (PL). The photo detector (D) is used to receive optical data signals from the optical transmitter. The pilot light (PL) is used to assist the transmitter to detect the position of the optical receiver or the target device and at the same time to direct the light from the light source (LS) to the photo detector (D) of the target device.

For such pilot light based beam alignment systems, the design challenges are the following:
- The surface of the pilot light (PL) must be much smaller than the surface of the photo detector (D), as shown in the figure. In practice this may be difficult to achieve when high data rate is required for the communication link, because the detector (D) (usually photo diode, or avalanche photo diode) must have small surface to obtain low parasitic capacitance, that directly influences the bandwidth of the receiver in the target device.
- When the surface of the detector (D) is smaller than the surface of the pilot light (PL), the beam from the light source (LS) must be large enough to cover the detector (D). This limits the beam width to a certain extend determined by the sizes of the pilot light (PL) and the detector (D), and the distance between them.

Given the limitation of the conventional pilot light based system, in practice it is usually implemented by splitting the pilot light into multiple smaller pilot lights that are placed around the data receiving detector. However, one of the challenges of such a setup is the accuracy of the alignment between the emitting light source and the QD. Small mechanical shifts or pollution on the optical windows or asymmetries in the light emission of the pilot lights will create offsets from the data beam on the optical receiver resulting in a lower S/N ration of the data signal or even a failure to receive optical data.

Fig. 2 illustrates basic components of an optical receiver 200 according to the present invention. The optical receiver 300 comprises a photo detector 310, at least two pilot light sources 321, 322, and a controller 330.

The photo detector 310 is configured to detect a data beam sent by an optical transmitter 200 for optical data communication. The at least two pilot light sources 321, 322 are configured to emit pilot light to assist a beam alignment procedure carried out by the optical transmitter 200. The at least two pilot light sources 321, 322 are placed on different sides of the photo detector 310. The controller 330 is configured to determine for each one of the at least two pilot light sources 321, 322 an individual pilot light intensity based on a received beam strength of the data beam detected by the photo detector 310, and control each one of the at least two pilot light sources 321, 322 to emit pilot light according to the determined corresponding individual pilot light intensity, such that the center of gravity of combined pilot light intensities of the at least two pilot light sources 321, 322 provides an indication to the optical transmitter 200 about a desired direction of movement of the data beam.

Fig. 3 demonstrates an example arrangement of at least two pilot light sources 321, 322 and a photo detector 310 in an optical receiver 300. As shown in Fig. 3, the at least two pilot light sources 321, 322 are placed on different sides of the photo detector 310 with a separation distance of d₁ and d₂ respectively. Note that d₁ and d₂ may be different, such that the at least two pilot light sources are placed on different sides of the photo detector in an asymmetrical manner. Then the controller needs to take the different distances into consideration when determining the individual pilot light intensity, such that the center of gravity of combined pilot light intensities provides good indication to the optical transmitter. For example, the different distances between the at least two pilot light sources and the photo detector may be compensated by applying additionally one or more correction factor on the individual pilot light intensities as compared to the symmetrical deployment.

Preferably, the two pilot light sources are symmetrically placed on different sides of the photo detector, such that d₁ = d₂.

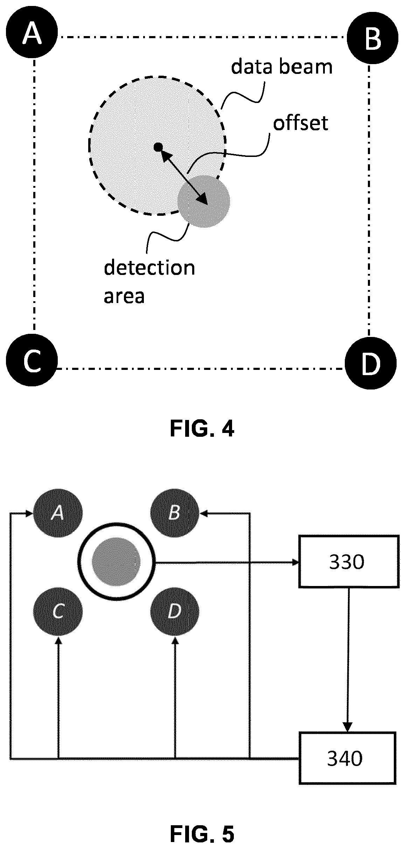

Fig. 4 illustrates one example of the receiving plane of the optical receiver 300. For the ease of illustration, in this example four pilot light source A, B, C, D are deployed around the photo detector 310. As shown in the figure, the data beam coming from the optical transmitter 200 is aimed beside the detection area of the optical receiver 300, such that there is an offset between the center of the injected data beam and the center of the detection area of the photo detector 310. Such an offset leads to a reduced received beam strength, such as a less optimal received data signal. The larger the offset, the worse the received signal quality.

By introducing an asymmetry in the pilot light intensity or pilot light signal strength (in this case increasing the light from pilot light D and decreasing the light from pilot light A), the center of gravity of all pilot lights is moved towards pilot light D. upon receiving the pilot light from the optical receiver 300, the transmitter 200 will then control the emitted data beam to follow the center of gravity to better align with the detection area in the optical receiver 300. The controller 330 of the optical receiver may control small movements of the center of gravity in the directions in for example X and Y directions and detect in which direction it should be moved to increase the received beam strength in an iterative manner.

The controller 330 is further configured to control each one of the at least two pilot light sources 321, 322 to maintain individual pilot light intensities when the received beam strength is above a first predefined threshold. The first predefined threshold may be a value either in a linear scale or a decibel scale, which indicates that the received beam strength is sufficient for further processing in the optical receiver, such as to demodulate and decode the data comprised in the optical data beam.

When the received beam strength is below a second predefined threshold, the controller 330 is further configured to control the at least two pilot light sources 321, 322 to change the individual pilot light intensities to start scanning the center of gravity of the pilot light intensities over a detection surface of the optical receiver 300. The second predefined threshold may be a value either in a linear scale or a decibel scale. The second predefined threshold may be a value equal to or less than the minimum beam strength required by the optical receiver to maintain a data communication link even at the lowest data rate. When the received signal is too weak, or simply no beam is detected by the photo detector, a new scan will be initiated by the controller.

When there are only two pilot light sources 321, 322 deployed, the scan may be carried out by moving the center of gravity over a line between the two pilot light source 321, 322. When there are more than two pilot light sources deployed, the controller 330 is configured to control the pilot light sources 321, 322 to follow a raster scan over the detection surface with the center of gravity of the pilot light intensities, such as a scan in two dimensions.

Basically, at least three pilot light sources 321, 322, 323 to assist the optical transmitter 200 to adjust the data beam in two dimensions.

The controller 330 is further configured to stop scanning when the received beam strength is above a third predefined threshold. The third predefined threshold may be a value either in a linear scale or a decibel scale. When the received beam strength is above the third predefined threshold, it indicates that the data beam is roughly aligned with the detection area of the optical receiver, and probably a fine adjustment may be still needed. Depending on the application, the third predefined threshold may be lower than the first predefined threshold, such as by a few dB if in a decibel scale.

The aforementioned scanning and stopping when sufficient signal strength is detected is one possible implementation. Alternatively, it may be possible that the offset is drifting away during an active optical wireless data link, in which situation a new full scan the system may run the risk to further degrade the data link, or even lose data connection completely. Therefore, it may be beneficial to make use of the full scan, such as a raster, scan for acquisition, and then for tracking the beam an iterative local search is used. And then, the controller 330 is configured to control the at least two pilot light sources 321, 322 to implement an iterative local search with the center of gravity of combined pilot light intensities when the received beam strength is below the first predefined threshold but above a fourth predefined threshold. The iterative local search is implemented by measuring a local derivative of the received beam strength of the data beam versus the center of gravity of combined pilot light intensities and then changing the center of gravity of combined pilot light intensities in the direction towards higher received beam strength of the data beam.

In one example, the beam alignment procedure first starts with a raster scan of the center of gravity until the data beam produces sufficient received beam strength on the photo detector. And then, it switches to an iterative local search algorithm, such as a hill climbing algorithm, to move the center of gravity in a small step until a maximum signal strength is detected by on the photo detector. With the hill climbing algorithm, a local derivative of the signal strength versus location of the center of gravity of pilot light is measured, and then the controller controls the pilot light sources to move the center of gravity of pilot light in the direction up hill to higher signal levels. The local derivative can be determined by making small movements (without losing the data link) by measuring with each small movements if the received beam strength goes up or down, and then move in the direction of higher received beam strength. This can be done when either the transmitter or the receiver moves or drifts away. With such a tracking algorithm, the received signal automatically optimizes the center of gravity to the best position. When the data connection is lost, a new scan can be initiated to get in lock again.

The fourth predefined threshold may be a value close or equal to a minimum received beam strength to maintain an optical wireless link, such as a signal strength required for the optical receiver to demodulate and decode received data signal at a lowest data rate.

Fig. 5 demonstrates an implementation of the optical receiver 300 to apply the more than one pilot light intensities via a pilot light driver 340. The pilot light driver 340 may be a programmable driver, such that the individual light intensities of the at least two pilot light sources can be controlled precisely. Alternatively, the pilot light driver 340 is a conventional light driver, and the individual light intensities of the at least two pilot light sources 321, 322 are controlled by adjusting the bias of the pilot light driver 340. It may be the option to deploy a single pilot light driver 340 to control the at least two pilot light sources 321, 322. It may also be an option that for each one of the at least two pilot light sources 321, 322 there is an individual pilot light driver 340.

The pilot light may be either unmodulated continuous wave or a modulated wave.

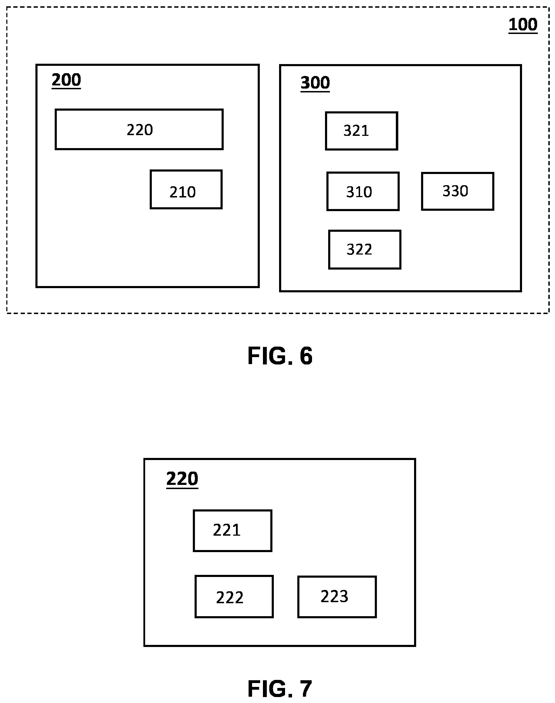

Fig. 6 illustrates an optical wireless communication system 100. The optical wireless communication (OWC) system 100 comprises an optical transmitter 200 and a remote optical receiver 300 according to the present invention. The optical transmitter 200 comprises a light source 210 and a subsystem 220. The light source 210 is configured to emit a data beam for optical data communication. The subsystem 220 is configured to carry out a data beam alignment procedure based on pilot light received from the remote optical receiver 300.

The pair of remote communication devices 200, 300 operate at an optical band, such as in visible light, Ultraviolet (UV), and Infrared (IR) spectra. Point-to-point Li-Fi or optical wireless systems are usually narrow angle systems. The beam angle between two remote receivers is typically not larger than 30 degrees, or 15 degrees half angle. To support high data rate and long distance communication, the beam angle may be in the order of 1 to 5 degrees half-angle and even going down and including a non-diverging beam. Therefore, it is important to align the beam emitted from the light source 210 of the optical transmitter 200 precisely towards the photo detector 310 of the optical receiver 300.

In an optical wireless communication system 100 with bi-directional communication, the two remote devices 200, 300 may have both transmitting and receiving capabilities, as an optical transceiver. Hence, a first device may comprise an optical transmitter 200 according to the present invention and a conventional receiver, and a second device may have a conventional transmitter and an optical receiver 300 according to the present invention. It may also be an option that both devices comprised the optical transmitter 200 and the optical receiver 300 according to the present invention. And then, the beam alignment procedure may be enabled bidirectionally.

Fig. 7 illustrates one example to implement the subsystem 220 in the optical transmitter 200. The basic components comprised in a subsystem 220 of the optical transmitter 200 are a multi element detector 221, a beam-steering unit 222, and a controller 223.

The multi element detector 221 is configured to detect pilot light from the remote optical receiver 300. The multi element detector 221 is a kind of photo detector comprising more than one detector element. In one example, the multi element detector is a quadrant detector. Beneficially, the more elements comprised in the multi element detector, the better for assisting the beam alignment procedure. However, the cost of the system may also increase accordingly. The beam-steering unit 222 is configured to steer the data beam emitted by the light source 210. The beam-steering unit 222 may comprise one or more mirrors, prisms, lenses, or rotating diffraction gratings. The controller 223 of the optical transmitter 200 is configured to control the beam-steering unit based on the indication provided by the center of gravity of the pilot light detected by the multi element detector 221.

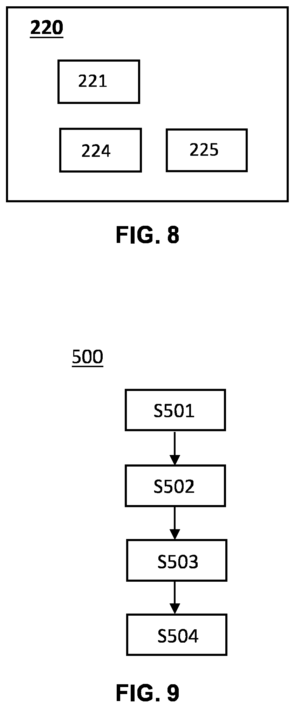

Fig. 8 demonstrates another example of basic components comprised in a beam alignment subsystem 220 of the optical transmitter 200. The beam alignment subsystem 220 may comprise a tiltable mirror 224, a beam splitter 225, and a multi element detector 221. The tiltable mirror 224 is configured to reflect the incident light to a beam splitter 225. The beam splitter 225 is configured to selectively direct either the reflected light from the tiltable mirror 224 to a multi element detector 221, or the beam from the light source 210 to the remote optical receiver 300. The multi element detector 221 is configured to detect the reflected incident light directed by the beam splitter 222 and provide a control signal to steer the tiltable mirror 221 based on the center of gravity of the reflected pilot light.

Fig. 9 shows a flow chart of a method 500 of an optical receiver 300. The method 500 comprises the steps of the optical receiver 300:
- detecting in step S501, by a photo detector 310 of the optical receiver 300, a data beam sent by an optical transmitter 200;
- emitting in step S502 pilot light, by at least two pilot light sources 321, 322 of the optical receiver 300, to assist a beam alignment procedure carried out by the optical transmitter 200; wherein the at least two pilot light sources 321, 322 are placed on different sides of the photo detector 310;
- determining in step S503, by a controller 330 of the optical receiver 300, for each one of the at least two pilot light sources 321, 322 an individual pilot light intensity based on a received beam strength of the data beam detected by the photo detector 310, and controlling in step S504 each one of the at least two pilot light sources 321, 322 to emit pilot light according to the determined corresponding individual pilot light intensity, such that the center of gravity of the combined pilot light intensities of the at least two pilot light sources 321, 322 provides an indication to the optical transmitter 200 about a desired direction of movement of the data beam.

The person skilled in the art realizes that the present invention by no means is limited to the preferred embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. An optical receiver (300) comprising:
- a photo detector (310) configured to detect a data beam sent by an optical transmitter (200);
- at least two pilot light sources (321, 322) configured to emit pilot light to assist a beam alignment procedure carried out by the optical transmitter (200); wherein the at least two pilot light sources (321, 322) are placed on different sides of the photo detector (310); and
- a controller (330);
**characterized in that** the controller (330) is configured to:
- determine for each one of the at least two pilot light sources (321, 322) an individual pilot light intensity based on a received beam strength of the data beam detected by the photo detector (310), and
- control each one of the at least two pilot light sources (321, 322) to emit pilot light according to the determined corresponding individual pilot light intensity, such that the center of gravity of combined pilot light intensities of the at least two pilot light sources (321, 322) provides an indication to the optical transmitter (200) about a desired direction of movement of the data beam.

2. The optical receiver (300) of claim 1, wherein the controller (330) is further configured to control each one of the at least two pilot light sources (321, 322) to maintain individual pilot light intensities when the received beam strength is above a first predefined threshold.

3. The optical receiver (300) of claim 1 or 2, wherein the controller (330) is further configured to control the at least two pilot light sources (321, 322) to change the individual pilot light intensities to start scanning the center of gravity of the pilot light intensities over a detection surface of the optical receiver (300) when the received beam strength is below a second predefined threshold.

4. The optical receiver (300) of claim 3, wherein the controller (330) is further configured to stop scanning when the received beam strength is above a third predefined threshold.

5. The optical receiver (300) of claim 3 or 4, wherein the controller (330) is configured to control the pilot light sources to follow a raster scan over a detection surface with the center of gravity of the pilot light intensities when there are more than two pilot light sources (321, 322).

6. The optical receiver (300) of any one of the previous claims 3-5, wherein the controller (330) is configured to control the at least two pilot light sources (321, 322) to implement an iterative local search with the center of gravity of combined pilot light intensities when the received beam strength is below the first predefined threshold but above a fourth predefined threshold; wherein the iterative local search is implemented by measuring a local derivative of the received beam strength of the data beam versus the center of gravity of combined pilot light intensities and then changing the center of gravity of combined pilot light intensities in the direction towards higher received beam strength of the data beam.

7. The optical receiver (300) of claim 6, wherein the iterative local search is according to a hill climbing algorithm.

8. The optical receiver (300) of any one of the previous claims comprising at least three pilot light sources (321, 322, 323) to assist the optical transmitter (200) to adjust the data beam in two dimensions.

9. The optical receiver (300) of any one of the previous claims comprising one or more pilot light drivers (340) configured to regulate a supply voltage and/or current connected to the more than one pilot light sources (321, 322, 323) to apply the more than one pilot light intensities determined by the controller (330).

10. The optical receiver (300) of any one of the previous claims, wherein the pilot light is a continuous wave.

11. The optical receiver (300) of any one of the previous claims 1-9, wherein the pilot light is a modulated wave.

12. An optical wireless communication, OWC, system (100) comprising:
- an optical transmitter (200) comprising:
- a light source (210) configured to emit a data beam for optical data communication;
- a subsystem (220) configured to carry out a data beam alignment procedure based on pilot light received from a remote optical receiver (300); and
- the remote optical receiver (300) according to any one of previous claims 1-8.

13. The OWC system (100) of claim 12, wherein the subsystem (220) comprises:
- a multi element detector (221) configured to detect pilot light from the remote optical receiver (300);
- a beam-steering unit (222) configured to steer the data beam emitted by the light source (210);
- a controller (223) configured to control the beam-steering unit based on the indication provided by the center of gravity of the pilot light detected by the multi element detector (221).

14. The OWC system (100) of claim 12, wherein the subsystem (220) comprises:
- a tiltable mirror (224) configured to reflect the pilot light to a beam splitter (225);
- the beam splitter (225) configured to selectively direct:
- either reflected pilot light from the tiltable mirror (224) to a multi element detector (221); or
- the beam from the light source (210) to the remote optical receiver (300);
- the multi element detector (221) configured to:
- detect the reflected pilot light directed by the beam splitter; and
- provide a control signal to steer the tiltable mirror based on the center of gravity of the reflected pilot light.

15. A method (500) carried out by an optical receiver (300) comprising the steps of:
- detecting (S501), by a photo detector (310) of the optical receiver (300), a data beam sent by an optical transmitter (200);
- emitting (S502) pilot light, by at least two pilot light sources (321, 322) of the optical receiver (300), to assist a beam alignment procedure carried out by the optical transmitter (200); wherein the at least two pilot light sources (321, 322) are placed on different sides of the photo detector (310);
**characterized in**:
- determining (S503), by a controller (330) of the optical receiver (300), for each one of the at least two pilot light sources (321, 322) an individual pilot light intensity based on a received beam strength of the data beam detected by the photo detector (310), and controlling (S504) each one of the at least two pilot light sources (321, 322) to emit pilot light according to the determined corresponding individual pilot light intensity, such that the center of gravity of the combined pilot light intensities of the at least two pilot light sources (321, 322) provides an indication to the optical transmitter (200) about a desired direction of movement of the data beam.

## Patentansprüche

1. Optischer Empfänger (300), umfassend:
- einen Photodetektor (310), der konfiguriert ist, um einen Datenstrahl zu erfassen, der durch einen optischen Transmitter (200) gesendeten wird;
- mindestens zwei Anzeigeleuchtequellen (321, 322), die konfiguriert sind, um eine Anzeigeleuchte abzugeben, um einen Strahlausrichtungsvorgang zu unterstützen, der durch den optischen Transmitter (200) ausgeführt wird; wobei die mindestens zwei Anzeigeleuchtequellen (321, 322) auf unterschiedlichen Seiten des Photodetektors (310) platziert sind; und
- eine Steuereinrichtung (330);
**dadurch gekennzeichnet, dass** die Steuereinrichtung (330) konfiguriert ist zum:
- Bestimmen für jede der mindestens zwei Anzeigeleuchtequellen (321, 322) einer individuellen Anzeigeleuchteintensität basierend auf einer empfangenen Strahlstärke des Datenstrahls, der durch den Photodetektor (310) erfasst wird, und
- Steuern jeder der mindestens zwei Anzeigeleuchtequellen (321, 322), um die Anzeigeleuchte gemäß der bestimmten entsprechenden individuellen Anzeigeleuchteintensität derart abzugeben, dass der Schwerpunkt von kombinierten Anzeigeleuchteintensitäten der mindestens zwei Anzeigeleuchtequellen (321, 322) dem optischen Transmitter (200) eine Angabe über eine gewünschte Bewegungsrichtung des Datenstrahls bereitstellt.

2. Optischer Empfänger (300) nach Anspruch 1, wobei die Steuereinrichtung (330) ferner konfiguriert ist, um jede der mindestens zwei Anzeigeleuchtequellen (321, 322) zu steuern, um individuelle Anzeigeleuchteintensitäten aufrechtzuerhalten, wenn die empfangene Strahlstärke über einer ersten vordefinierten Schwelle liegt.

3. Optischer Empfänger (300) nach Anspruch 1 oder 2, wobei die Steuereinrichtung (330) ferner konfiguriert ist, um die mindestens zwei Anzeigeleuchtequellen (321, 322) zu steuern, um die individuellen Anzeigeleuchteintensitäten zu ändern, um ein Abtasten des Schwerpunkts der Anzeigeleuchteintensitäten über eine Erfassungsoberfläche des optischen Empfängers (300) zu starten, wenn die empfangene Strahlstärke unter einer zweiten vordefinierten Schwelle liegt.

4. Optischer Empfänger (300) nach Anspruch 3, wobei die Steuereinrichtung (330) ferner konfiguriert ist, um das Abtasten zu stoppen, wenn die empfangene Strahlstärke über einer dritten vordefinierten Schwelle liegt.

5. Optischer Empfänger (300) nach Anspruch 3 oder 4, wobei die Steuereinrichtung (330) konfiguriert ist, um die Anzeigeleuchtequellen zu steuern, um einer Rasterabtastung mit dem Schwerpunkt der Anzeigeleuchteintensitäten über eine Erfassungsoberfläche folgen, wenn mehr als zwei Anzeigeleuchtequellen (321, 322) vorhanden sind.

6. Optischer Empfänger (300) nach einem der vorstehenden Ansprüche 3 bis 5, wobei die Steuereinrichtung (330) konfiguriert ist, um die mindestens zwei Anzeigeleuchtequellen (321, 322) zu steuern, um eine iterative lokale Suche mit dem Schwerpunkt von kombinierten Anzeigeleuchteintensitäten zu implementieren, wenn die empfangene Strahlstärke unter der ersten vordefinierten Schwelle, jedoch über einer vierten vordefinierten Schwelle liegt; wobei die iterative lokale Suche durch ein Messen eines lokalen Derivats der empfangenen Strahlstärke des Datenstrahls gegenüber dem Schwerpunkt von kombinierten Anzeigeleuchteintensitäten und dann das Ändern des Schwerpunkts von kombinierten Anzeigeleuchteintensitäten in der Richtung einer höheren empfangenen Strahlstärke des Datenstrahls implementiert wird.

7. Optischer Empfänger (300) nach Anspruch 6, wobei die iterative lokale Suche gemäß einem Bergsteigeralgorithmus erfolgt.

8. Optischer Empfänger (300) nach einem der vorstehenden Ansprüche, umfassend mindestens drei Anzeigeleuchtequellen (321, 322, 323), um den optischen Transmitter (200) zu unterstützen, um den Datenstrahl in zwei Dimensionen anzupassen.

9. Optischer Empfänger (300) nach einem der vorstehenden Ansprüche, umfassend einen oder mehrere Anzeigeleuchtetreiber (340), die konfiguriert sind, um eine Versorgungsspannung und/oder einen Strom zu regeln, die/der mit den mehr als einen Anzeigeleuchtequellen (321, 322, 323) verbunden ist, um die mehr als einen Anzeigeleuchteintensitäten anzuwenden, die durch die Steuereinrichtung (330) bestimmt werden.

10. Optischer Empfänger (300) nach einem der vorstehenden Ansprüche, wobei die Anzeigeleuchte eine kontinuierliche Welle ist.

11. Optischer Empfänger (300) nach einem der vorstehenden Ansprüche 1 bis 9, wobei die Anzeigeleuchte eine modulierte Welle ist.

12. System (100) für optische drahtlose Kommunikation, OWC-System, umfassend:
- einen optischen Transmitter (200), umfassend:
- eine Lichtquelle (210), die konfiguriert ist, um einen Datenstrahl für eine optische Datenkommunikation abzugeben;
- ein Subsystem (220), das konfiguriert ist, um einen Datenstrahlausrichtungsvorgang basierend auf der Anzeigeleuchte auszuführen, die von einem entfernten optischen Empfänger (300) empfangen wird; und
- den entfernten optischen Empfänger (300) nach einem der vorstehenden Ansprüche 1 bis 8.

13. OWC-System (100) nach Anspruch 12, wobei das Subsystem (220) umfasst:
- einen Mehrelementdetektor (221), der konfiguriert ist, um die Anzeigeleuchte von dem entfernten optischen Empfänger (300) zu erfassen;
- eine Strahllenkungseinheit (222), die konfiguriert ist, um den Datenstrahl zu lenken, der durch die Lichtquelle (210) abgegeben wird;
- eine Steuereinrichtung (223), die konfiguriert ist, um die Strahllenkungseinheit basierend auf der Angabe zu steuern, die durch den Schwerpunkt der Anzeigeleuchte bereitgestellt wird, die durch den Mehrelementdetektor (221) erfasst wird.

14. OWC-System (100) nach Anspruch 12, wobei das Subsystem (220) umfasst:
- einen kippbaren Spiegel (224), der konfiguriert ist, um die Anzeigeleuchte auf einen Strahlteiler (225) zu reflektieren;
- den Strahlteiler (225), der konfiguriert ist, um selektiv zu leiten:
- entweder die reflektierte Anzeigeleuchte von dem kippbaren Spiegel (224) zu einem Multielementdetektor (221); oder
- den Strahl von der Lichtquelle (210) zu dem entfernten optischen Empfänger (300);
- wobei der Multielementdetektor (221) konfiguriert ist zum:
- Erfassen der reflektierten Anzeigeleuchte, die durch den Strahlteiler gelenkt wird; und
- Bereitstellen eines Steuersignal, um den kippbaren Spiegel basierend auf dem Schwerpunkt der reflektierten Anzeigeleuchte zu lenken.

15. Verfahren (500), das durch einen optischen Empfänger (300) ausgeführt wird, umfassend die Schritte:
- Erfassen (S501), durch einen Photodetektor (310) des optischen Empfängers (300), eines Datenstrahls, der durch einen optischen Transmitter (200) gesendet wird;
- Abgeben (S502) der Anzeigeleuchte, durch mindestens zwei Anzeigeleuchtequellen (321, 322) des optischen Empfängers (300), um einen Strahlausrichtungsvorgang zu unterstützten, der durch den optischen Transmitter (200) ausgeführt wird; wobei die mindestens zwei Anzeigeleuchtequellen (321, 322) auf unterschiedlichen Seiten des Photodetektors (310) platziert sind;
**gekennzeichnet durch**:
- Bestimmen (S503), durch eine Steuereinrichtung (330) des optischen Empfängers (300), für jede der mindestens zwei Anzeigeleuchtequellen (321, 322) einer individuellen Anzeigeleuchteintensität basierend auf einer empfangenen Strahlstärke des Datenstrahls, der durch den Photodetektor (310) erfasst wird, und Steuern (S504) jeder der mindestens zwei Anzeigeleuchtequellen (321, 322), um die Anzeigeleuchte gemäß der bestimmten entsprechenden individuellen Anzeigeleuchteintensität derart abzugeben, dass der Schwerpunkt der kombinierten Anzeigeleuchteintensität der mindestens zwei Anzeigeleuchtequellen (321, 322) dem optischen Transmitter (200) eine Angabe über eine gewünschte Bewegungsrichtung des Datenstrahls bereitstellt.

## Revendications

1. Récepteur optique (300) comprenant :
- un photodétecteur (310) configuré pour détecter un faisceau de données envoyé par un émetteur optique (200) ;
- au moins deux sources de lumière pilote (321, 322) configurées pour émettre une lumière pilote afin d'assister une procédure d'alignement de faisceau effectuée par l'émetteur optique (200) ; dans lequel les au moins deux sources de lumière pilote (321, 322) sont placées sur des côtés différents du photodétecteur (310) ; et
- un dispositif de commande (330) ;
**caractérisé en ce que** le dispositif de commande (330) est configuré pour :
- déterminer pour chacune des au moins deux sources de lumière pilote (321, 322) une intensité de lumière pilote individuelle sur la base d'une intensité du faisceau reçu du faisceau de données détecté par le photodétecteur (310), et
- commander chacune des au moins deux sources de lumière pilote (321, 322) pour émettre une lumière pilote selon l'intensité de lumière pilote individuelle correspondante déterminée, de telle sorte que le centre de gravité des intensités de lumière pilote combinées des au moins deux sources de lumière pilote (321, 322) fournit une indication à l'émetteur optique (200) concernant une direction de mouvement souhaitée du faisceau de données.

2. Récepteur optique (300) selon la revendication 1, dans lequel le dispositif de commande (330) est en outre configuré pour commander chacune des au moins deux sources de lumière pilote (321, 322) pour maintenir des intensités de lumière pilote individuelles lorsque l'intensité du faisceau reçu est supérieure à un premier seuil prédéfini.

3. Récepteur optique (300) selon la revendication 1 ou 2, dans lequel le dispositif de commande (330) est en outre configuré pour commander les au moins deux sources de lumière pilote (321, 322) afin de modifier les intensités de lumière pilote individuelles pour commencer à balayer le centre de gravité des intensités de lumière pilote sur une surface de détection du récepteur optique (300) lorsque l'intensité du faisceau reçu est inférieure à un deuxième seuil prédéfini.

4. Récepteur optique (300) selon la revendication 3, dans lequel le dispositif de commande (330) est en outre configuré pour arrêter le balayage lorsque l'intensité du faisceau reçu est supérieure à un troisième seuil prédéfini.

5. Récepteur optique (300) selon la revendication 3 ou 4, dans lequel le dispositif de commande (330) est configuré pour commander les sources de lumière pilote pour suivre un balayage de trame sur une surface de détection avec le centre de gravité des intensités de lumière pilote lorsqu'il y a plus de deux sources de lumière pilote (321, 322).

6. Récepteur optique (300) selon l'une quelconque des revendications 3 à 5 précédentes, dans lequel le dispositif de commande (330) est configuré pour commander les au moins deux sources de lumière pilote (321, 322) pour mettre en œuvre une recherche locale itérative avec le centre de gravité des intensités de lumière pilote combinées lorsque l'intensité du faisceau reçu est inférieure au premier seuil prédéfini mais supérieure à un quatrième seuil prédéfini ; dans lequel la recherche locale itérative est mise en œuvre en mesurant une dérivée locale de l'intensité du faisceau reçu du faisceau de données par rapport au centre de gravité des intensités de lumière pilote combinées, puis en changeant le centre de gravité des intensités de lumière pilote combinées dans la direction d'une intensité du faisceau reçu plus élevée du faisceau de données.

7. Récepteur optique (300) selon la revendication 6, dans lequel la recherche locale itérative est selon un algorithme d'escalade.

8. Récepteur optique (300) selon l'une quelconque des revendications précédentes comprenant au moins trois sources de lumière pilote (321, 322, 323) pour aider l'émetteur optique (200) à ajuster le faisceau de données dans deux dimensions.

9. Récepteur optique (300) selon l'une quelconque des revendications précédentes comprenant un ou plusieurs circuits d'attaque de lumière pilote (340) configurés pour réguler une tension et/ou un courant d'alimentation connectés aux plus d'une sources de lumière pilote (321, 322, 323) pour appliquer les plus d'une intensités de lumière pilote déterminées par le dispositif de commande (330).

10. Récepteur optique (300) selon l'une quelconque des revendications précédentes, dans lequel la lumière pilote est une onde continue.

11. Récepteur optique (300) selon l'une quelconque des revendications précédentes 1 à 9, dans lequel la lumière pilote est une onde modulée.

12. Système de communication optique sans fil, OWC (100) comprenant :
- un émetteur optique (200) comprenant :
- une source de lumière (210) configurée pour émettre un faisceau de données pour une communication optique de données ;
- un sous-système (220) configuré pour effectuer une procédure d'alignement de faisceau de données sur la base d'une lumière pilote reçue d'un récepteur optique (300) distant ; et
- le récepteur optique (300) distant selon l'une quelconque des revendications précédentes 1 à 8.

13. Système OWC (100) selon la revendication 12, dans lequel le sous-système (220) comprend :
- un détecteur multi-élément (221) configuré pour détecter une lumière pilote provenant du récepteur optique (300) distant ;
- une unité d'orientation de faisceau (222) configurée pour orienter le faisceau de données émis par la source de lumière (210) ;
- un dispositif de commande (223) configuré pour commander l'unité d'orientation de faisceau sur la base de l'indication fournie par le centre de gravité de la lumière pilote détectée par le détecteur multi-élément (221).

14. Système OWC (100) selon la revendication 12, dans lequel le sous-système (220) comprend :
- un miroir inclinable (224) configuré pour réfléchir la lumière pilote vers un séparateur de faisceau (225) ;
- le séparateur de faisceau (225) configuré pour diriger sélectivement :
- soit la lumière pilote réfléchie depuis le miroir inclinable (224) vers un détecteur multi-éléments (221) ; ou
- le faisceau de la source de lumière (210) au récepteur optique (300) distant ;
- le détecteur multi-éléments (221) configuré pour :
- détecter la lumière pilote réfléchie dirigée par le séparateur de faisceau ; et
- fournir un signal de commande pour orienter le miroir inclinable en fonction du centre de gravité de la lumière pilote réfléchie.

15. Procédé (500) effectué par un récepteur optique (300) comprenant les étapes consistant à :
- détecter (S501), par un photodétecteur (310) du récepteur optique (300), un faisceau de données envoyé par un émetteur optique (200) ;
- l'émission (S502) d'une lumière pilote, par au moins deux sources de lumière pilote (321, 322) du récepteur optique (300), pour assister une procédure d'alignement de faisceau effectuée par l'émetteur optique (200) ; dans lequel les au moins deux sources de lumière pilote (321, 322) sont placées sur des côtés différents du photodétecteur (310) ;
**caractérisé par :**
- la détermination (S503), par un dispositif de commande (330) du récepteur optique (300), pour chacune des au moins deux sources de lumière pilote (321, 322) d'une intensité de lumière pilote individuelle sur la base d'une intensité du faisceau reçu du faisceau de données détecté par le photodétecteur (310), et la commande (S504) de chacune des au moins deux sources de lumière pilote (321, 322) pour émettre une lumière pilote selon l'intensité de lumière pilote individuelle correspondante déterminée, de telle sorte que le centre de gravité des intensités de lumière pilote combinées des au moins deux sources de lumière pilote (321, 322) fournit une indication à l'émetteur optique (200) concernant une direction de mouvement souhaitée du faisceau de données.
